(19) Europäisches Patentamt

European Patent Office

Office européen des brevets

(11) **EP 0 553 713 B1**

(12) **EUROPEAN PATENT SPECIFICATION**

(45) Date of publication and mention
of the grant of the patent:
**12.11.1997 Bulletin 1997/46**

(51) Int Cl.⁶: **H04B 1/59**

(21) Application number: 93100898.1

(22) Date of filing: **21.01.1993**

(54) **Radio communication system**

Funkkommunikationssystem

Système de radiocommunications

(84) Designated Contracting States:
**DE FR GB IT**

(30) Priority: **31.01.1992 JP 16773/92**

(43) Date of publication of application:
**04.08.1993 Bulletin 1993/31**

(73) Proprietor: **Shinko Electric Co. Ltd.
Chuo-ku Tokyo (JP)**

(72) Inventor: **Kurasawa, Kiyoyoshi,
c/o Toyohashi Works
Sanya-cho, Toyohashi-shi, Aichi (JP)**

(74) Representative: **Grünecker, Kinkeldey,
Stockmair & Schwanhäusser Anwaltssozietät
Maximilianstrasse 58
80538 München (DE)**

(56) References cited:
**WO-A-89/05549     DE-A- 3 805 343**

## Description

This invention relates to a radio communication system having a fixed station and a mobile station between which radio signals are transmitted as defined in the preamble part of claim 1.

Recently, in place of a magnetic card, a non-contact IC card has been put in practical use. Such a card is disclosed, for instance, in Japanese Patent Publication No. 12353/1990. The card has a data processing function; that is, the card is able to transmit data to or receive data from an external input/output device in a non-contact mode (or by radio communication).

Typically, the non-contact IC card operates as follows: When the non-contact IC card is placed in a field of oscillation energy such as a high frequency magnetic field generated by an external input/output device, it absorbs the oscillation energy through a radio wave receiving unit such as a loop antenna to convert it into electric power, and reads data and instructions from the radio waves. The data and instructions are processed to change or add data, or to perform identification code and data reading processes according to the instructions thus read. The card then transmits signals based thereon to the external input/output device. Communications between the external input/output device and the non-contact IC card are performed according to a half-duplex operation system including at least two radio stations in which, when one radio station transmits a radio signal, the other does not, and vice versa.

On the other hand, sometimes it is impossible for a thin non-contact IC card to employ a crystal oscillator as a reference signal generating source because of its dimensional limitation. In that case, an element such as a ceramic capacitor is used to generate the reference signal. However, the use of the reference signal generating element results in the disadvantage that the oscillation frequency fluctuates greatly.

If the transmission signal of the non-contact IC card is shifted in frequency, the external input/output device cannot receive it without performing a search operation. As a result, the communication time is delayed by the time to complete the search, and the communication protocol is intricate.

In the case where the transmission signal of the non-contact IC card is adversely affected by external radio waves, it is necessary to change the transmission frequency on the side of the non-contact IC card. Circuits built into the card for this purpose are unavoidably complicated.

In the case where the fixed station outputs an FM or FSK signal, a special analog element such as a varactor is generally employed. However, in this case, the operation of the fixed station is liable to be affected by variations in temperature or voltage.

WO89/05549 discloses a transponder receiver means adapted to extract powering energy from a surrounding electromagnetic field and a transponder transmitting means adapted to transmit at least one unique signal. A frequency generating means is provided for generating a plurality of predetermined frequencies, each frequency being adapted to carry the signal from the transmitter means to a interrogator receiver means adapted to receive said signal to achieve identification of the transponder. In one embodiment carrier frequencies are generated randomly in a PLL loop comprising a programmable divider which receives a command signal which determines the frequency of the carrier.

From DE-A38 95 343 a communication device comprising a transponder for transmitting a coded identification signal is known. Before transmitting the coded identification signal, a frequency conversion is effected by dividing the received frequency signal. The divided frequency signal is then modulated with a code stored in a ROM and transmitted.

The object of the invention is to provide a radio communication system in which radio communications are performed positively and stably without a countermeasure against the shift in frequency of a transmission signal or the like outputted by a mobile station such as a non-contact IC card, is not affected by variations in temperature or voltage, and does not require of a reference signal generating source such as a crystal oscillator.

This object is solved by a system comprising the features of claim 1.

In the radio communication system of the present invention, the fixed station or the mobile station receives a modulated signal with a reference signal, which is obtained by subjecting to frequency division or multiplication a signal having a predetermined frequency which has been transmitted by the fixed or mobile station which receives the reference signal. Therefore, the fixed station or the mobile station can receive the modulated signal positively, and stable radio communications are performed without the need for additional countermeasures against frequency shifts or the like.

FIG. 1 is a block diagram showing the arrangement of a radio communication system, which constitutes a preferred embodiment of this invention; and
FIG. 2 is a block diagram showing essential parts of a mobile station in the radio communication system.

One preferred embodiment of this invention will be described with reference to the accompanying drawings.

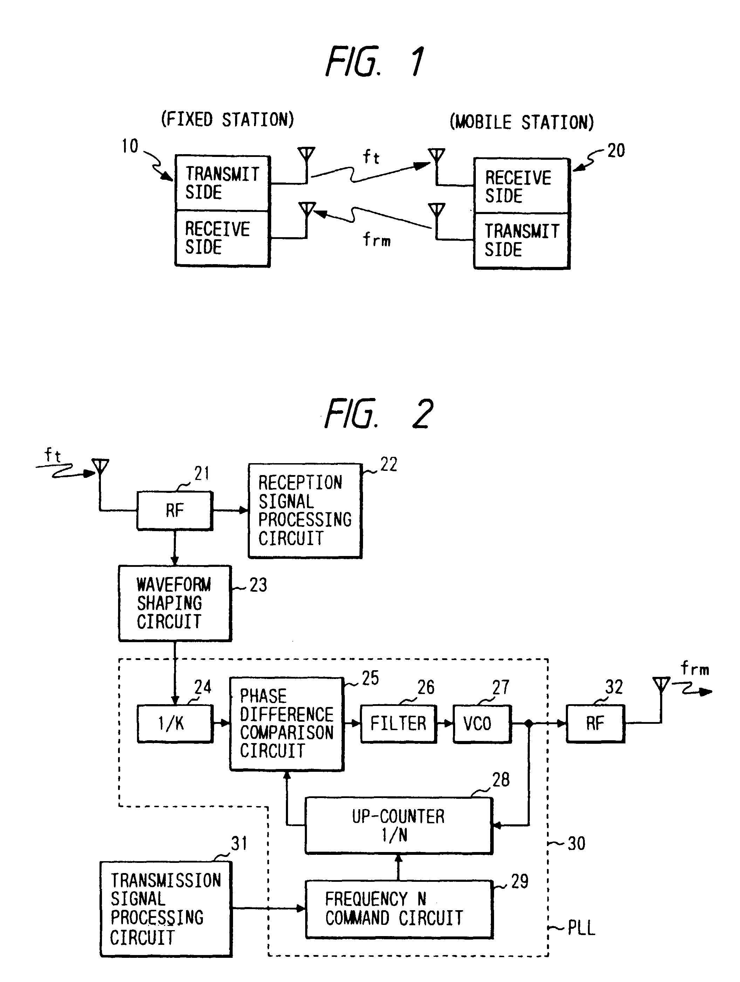

In FIG. 1, reference numeral 10 designates the aforementioned external input/output device, namely, a fixed station and reference numeral 20 designates the aforementioned non-contact IC card, namely, a mobile station.

FIG. 2 shows the arrangement of the mobile station 20, which includes a signal receiving circuit 21; a reception signal processing circuit 22; a waveform shaping circuit 23; a frequency dividing circuit 24; a phase difference comparison circuit 25; a filter circuit 26; a voltage-controlled oscillation circuit VCC 27; an up-counter 28; a frequency N command circuit 29; a transmission signal processing circuit 31; and a signal transmitting circuit 32. The circuits 24 through 29 form a Phase locked Loop (PLL) circuit 30.

Upon reception of a transmission signal bearing data or instructions from the fixed station 10, the mobile station 20 decodes the data or instructions to read from memory the data required by the fixed station 10, and transmits the data thus read to the transmission signal processing circuit 31. In response to this, the transmission signal processing circuit 31 outputs answer data (or a digital signal like "00101011").

When the mobile station 20 receives a signal having a predetermined frequency ($f_t$) from the fixed station 10, the signal, after being waveform-shaped by the waveform shaping circuit 23, is applied to the PLL circuit 30. In the PLL circuit 30, the frequency N command circuit 29 specifies a pulse number $N_1$ (for instance a numerical value "20") for answer data "1", and a pulse number $N_2$ (for instance a numerical value "5") for answer data "0". At this time, the fixed station 10 outputs a non-modurated wave such as a signal having a predetermined frequency, during which the fixed station 10 does not apply a signal to the mobile station 20.

When the signal having the predetermined frequency ($f_t$) which has been shaped is applied to the PLL circuit 30, it is subjected to 1/K frequency division by the frequency dividing circuit 24. The up-counter 28 repeatedly counts the output of the voltage-controlled oscillation circuit 27 up to $N_1$ when the frequency N command is $N_1$ ($N = N_1$), and up to $N_2$ when the frequency N command is $N_2$ ($N = N_2$). The phase difference comparison circuit 25 subjects the output (frequency $f_t$ x 1/K) of the frequency dividing circuit 24 and the output of the up-counter 28 to phase comparison, to output an error signal. The error signal is applied through the filter circuit 26, as a VCO control voltage, to the voltage-controlled oscillation circuit 27, which outputs a signal having a frequency $f_{rm}$ proportional to the VCO control voltage.

Hence, the transmission wave from the mobile station 20 may be an FM (or FSK) modulated wave having the following transmission frequency $f_{rm}$:

$$\text{When } N = N_1, \qquad f_{rm} = f_{r1} = f_t \times N_1/K \qquad (1)$$

$$\text{When } N = N_2, \qquad f_{rm} = f_{r2} = f_r \times N_2/K \qquad (2)$$

As is apparent from the above description, in the preferred embodiment, the mobile station 20 uses as the reference frequency the predetermined frequency $f_t$ of the signal transmitted by the fixed station. Therefore, it is unnecessary for the mobile station to have a reference frequency generating source such as a crystal oscillator.

Accordingly, in the case where the mobile station 20 is the non-contact IC card, the thickness of the latter can be reduced significantly.

The fixed station receives from the mobile station the modulated wave the reference signal for which is the signal which is obtained by dividing or multiplying the frequency of the signal which has been transmitted by itself. Hence, the fixed station can receive the modulated wave positively.

In the above-described embodiment, the frequency dividing circuit 24 may be replaced with a frequency multiplying circuit as the case may be.

In the above-described embodiment, the mobile station 20 is a non-contact IC card; but it will be appreciated that the invention is not necessarily limited thereto or thereby.

Furthermore, in the above-described embodiment, the fixed station transmits a signal having a predetermined frequency, and the mobile station receives it. However, the communication system may be so modified that the mobile station transmits a signal having a predetermined frequency, and the fixed station receives it.

As was described above, the mobile station or the fixed station employs a signal transmission pattern in which a modulated wave bearing data or instructions, and a non-modulated wave are transmitted alternately; and the mobile station or the fixed station receives a signal having a predetermined frequency, and transmits a modulated wave with a reference signal which is obtained by subjecting the signal having the predetermined frequency to frequency division or multiplication. Hence, it is unnecessary to use a reference signal generating source such as a crystal oscillator, and the non-contact IC card can be reduced in thickness and in size. Furthermore, the fixed station or the mobile station can receive the modulated wave positively. Thus, stable radio communications are carried out without the need for additional countermeasures against frequency shifts or the like. In addition, the system of the invention, unlike a conventional system using special analog elements such as varactors, is never affected by variations in temperature or in voltage.

**Claims**

1. A radio communication system comprising a fixed station (10) and a mobile station (20) radio signals being transmitted between the fixed and mobile station, means (21) in one of said mobile station (20) and fixed station (10) for receiving a signal having a predetermined frequency, means (30,32) for providing a transmission signal which is one of an FM and FSK modulated carrier, means (23,24) for generating a reference signal by subjecting the received signal to a frequency division or a multiplication, a phase locked loop (33) including a phase difference comparison circuit (25), whose output is filtered and input to a voltage control oscillator (27), the output of the voltage control oscillator is applied to a counter (28) which counts the output of the voltage control oscillator, the phase difference comparing circuit (25) comparing the phase of the outputs of the counter and the reference signal generating circuit to complete the phase locked loop, a command circuit (29) having an output connected to an input of said counter (28) **characterized in that** said command circuit (29) is arranged to input binary data from a transmission signal processing circuit (31) and to output a first pulse number for a binary "1" and a second pulse number for a binary "0", said counter counting up to said first and second pulse number output by the command circuit.

2. The radio communication system according to claim 1, **characterized in that** said mobile station (20) is of a non-contact type IC card.

3. The radio communication system according to claim 1 or 2, **characterized in that** said reference signal is obtained by a frequency converting circuit (24) for converting said predetermined frequency into said reference signal by frequency division or multiplication.

## Patentansprüche

1. Ein Funkkommunikationssystem das umfaßt eine feste Station (10) und eine bewegbare Station (20), wobei Funksignale zwischen der festen und der bewegbaren Station gesendet werden, eine Einrichtung (21) in der genannten bewegbaren Station (20) oder der festen Station (10) zum Empfangen eines Signals, das eine vorbestimmte Frequenz aufweist, eine Einrichtung (30, 32) zum Bereitstellen eines Sendesignals, das ein FM- oder FSK- modulierter Träger ist, eine Einrichtung (23, 24) zum Erzeugen eines Bezugssignals, indem das empfangene Signal einer Frequenzteilung oder Frequenzmultiplikation unterzogen wird, einem Phasenregelkreis (33) einschließlich einer Phasendifferenzvergleichsschaltung (25), deren Ausgang gefiltert und einem spannungsgesteuerten Oszillator (27) eingegeben wird, wobei der Ausgang des spannungsgesteuerten Oszillators an einen Zähler (28) gegeben wird, der den Ausgang des spannungsgesteuerten Oszillators zählt, die Phasendifferenzvergleichsschaltung (25) die Phase der Ausgänge des Zählers und der Bezugssignalerzeugungsschaltung vergleicht, um den Phasenregelkreis abzuschließen, eine Steuerschaltung (29), die einen mit dem Eingang des genannten Zählers (28) verbunden Ausgang hat,

**dadurch gekennzeichnet, daß** die genannte Steuerschaltung (29) ausgebildet ist, Binärdaten von einer Sendesignalverarbeitungsschaltung (31) einzugeben und eine erste Impulszahl für eine binäre "1" auszugeben und eine zweite Impulszahl für eine binäre "0", wobei der genannte Zähler die genannte erste und zweite Impulszahl aufzählt, die von der Steuerschaltung ausgegeben wird.

2. Das Funkkommunikationssystem gemäß Anspruch 1, **dadurch gekennzeichnet,** daß die genannte bewegbare Station (20) eine kontaktlose IC-Karte ist.

3. Das Funkkommunikationssystem gemäß Anspruch 1 oder 2, **dadurch gekennzeichnet,** daß das Bezugssignal durch eine Frequenzwandlungsschaltung (24) zum Umwandeln der genannten vorbestimmten Frequenz in das genannte Bezugssignal durch Frequenzteilung oder Frequenzmultiplikation erhalten wird.

## Revendications

1. Système de radiocommunications comprenant une station fixe (10) et une station mobile (20), des signaux radio étant transmis entre la station fixe et la station mobile, des moyens (21) dans l'une des stations mobile (20) et fixe (10) pour recevoir un signal ayant une fréquence prédéterminée, des moyens (30, 32) pour fournir un signal de transmission qui est celui d'une porteuse modulée MF et MDF, des moyens (23, 24) pour générer un signal de référence en soumettant le signal reçu à une répartition en fréquence ou une multiplication de fréquence, une boucle d'asservissement de phase (33) comprenant un circuit de comparaison de différence de phase (25), dont la sortie est filtrée et introduite dans un oscillateur à Commande par tension (27), la sortie de l'oscillateur à commande par tension est appliquée à un compteur (28) qui compte la sortie de l'oscillateur à commande par tension, le circuit comparant la différence de phase (25) comparant la phase des sorties du compteur et le circuit générant le signal de référence pour achever la boucle d'asservissement de phase, un circuit de commande (29) ayant une sortie connectée à une entrée du compteur (28) caractérisé en ce que ledit circuit de commande (29) est agencé pour entrer des données binaires d'un circuit de traitement de signal de transmission (31) et pour sortir un premier nombre d'impulsions pour un binaire "1" et un deuxième nombre d'impulsions pour un binaire "0", ledit compteur comptant jusqu'à la sortie du premier et du deuxième nombre d'impulsions fournie par le circuit de commande.

2. Système de radiocommunications selon la revendication 1, caractérisé en ce que ladite station mobile (20) est une carte à circuits intégrés (CI) du type sans contact.

3. Système de radiocommunications selon l'une des revendications 1 ou 2, caractérisé en ce que ledit signal de référence est obtenu par un circuit convertisseur de fréquence (24) pour convertir ladite fréquence prédéterminée en ledit signal de référence par répartition en fréquence ou multiplication de fréquence.

## FIG. 1

(FIXED STATION)    (MOBILE STATION)

10
TRANSMIT SIDE    ft    RECEIVE SIDE    20
RECEIVE SIDE    frm    TRANSMIT SIDE

## FIG. 2

ft

21
RF

22
RECEPTION SIGNAL PROCESSING CIRCUIT

23
WAVEFORM SHAPING CIRCUIT

24
1/K

25
PHASE DIFFERENCE COMPARISON CIRCUIT

26
FILTER

27
VCO

32
RF

frm

28
UP-COUNTER 1/N

30

31
TRANSMISSION SIGNAL PROCESSING CIRCUIT

29
FREQUENCY N COMMAND CIRCUIT

PLL